# EUROPÄISCHE PATENTSCHRIFT

(11) **EP 0 461 308 B1**
(45) Veröffentlichungstag und Bekanntmachung des Hinweises auf die Patenterteilung: **31.08.1994**
(21) Anmeldenummer: 90124943.3
(22) Anmeldetag: 20.12.1990
(51) Int. Cl.: F16L 47/00

(54) **Übergangsstück zum Verbinden von Kunststoffrohren mit Armaturen aus metallischen Werkstoffen, insbesondere im Sanitär- und Heizungsbereich**
Transition piece for connecting plastic pipes with a metallic reinforcement, in particular in the sanitary and heating fields
Pièce intermédiaire pour la liaison de tuyaux en matière plastique avec armature métallique, en particulier dans les domaines sanitaires et de chauffage

(30) Priorität: 13.06.1990 DE 4018982
(43) Veröffentlichungstag der Anmeldung: 18.12.1991
(73) Patentinhaber: POLYMELT ROLF HANSEN GMBH, 86971 Peiting (DE)
(72) Erfinder: Hansen, Rolf, W-8922 Peiting (DE); Oswald, Friedrich, W-8922 Peiting (DE)
(74) Vertreter: Schmitz, Hans-Werner, Dipl.-Ing.

(56) Entgegenhaltungen:
- EP-A- 0 233 608
- DE-A- 3 707 341
- US-A- 4 690 434

## Beschreibung

Die Erfindung betrifft ein Übergangsstück zum Verbinden von Kunststoffrohren mit Armaturen aus metallischen Werkstoffen, insbesondere im Sanitär- und Heizungsbereich, nach dem Oberbegriff des Anspruches 1.

Ein derartiges herkömmliches Übergangsstück weist eine üblicherweise zylindrische metallene Anschlußhülse auf, die in ihrer Innenbohrung mit einem Gewinde zum Anschluß der Armatur versehen ist. Auf der Außenumfangsfläche der Anschlußhülse ist ein Halteabschnitt vorgesehen, der mit Nuten versehen sein kann, damit das auf den Außenumfang der Anschlußhülse aufgespritzte Kunststoffmaterial des Verbindungsstückes einen besseren Halt findet.

Im Rahmen der Erfindung durchgeführte Untersuchungen haben jedoch ergeben, daß bei derartigen herkömmlichen Übergangsstücken insbesondere beim Aufbringen hoher Innendrücke durch fließende Flüssigkeiten Undichtigkeiten auftreten, die daraus resultieren, daß die Flüssigkeit den Verbindungsbereich zwischen Verbindungsstück und Anschlußhülse unterwandert und so aus dem gattunsgemäßen Übergangsstück austreten kann. Der Grund hierfür kann in einer Schrumpfung des Kunststoffes oder in Lockerungen der Verbindung zwischen Kunststoffmaterial und Anschlußhülse liegen. Die im Rahmen der Erfindung durchgeführten Untersuchungen haben jedoch ergeben, daß auch allein schon das Aufbringen hoher Innendrücke zu der genannten Unterkriechwirkung der im Übergangsstück geführten Flüssigkeit und somit zu Undichtigkeit führen kann.

Aus der EP-A-0 233 608 ist zwar eine Formschlauchverzweigung bekannt, bei der ein Ende eines Schlauches mit Rohrstutzen durch das Einspritzen einer ausvulkanisierten Masse festgelegt wird. Bei einer derartigen Formschlauchverzweigung wird jedoch das Kunststoffmaterial des Verbindungsstückes nicht in den Halteabschnitt eingespritzt. Zudem können die Rohrstutzen der aus der EP-A-0 233 608 bekannten Formschlauchverzweigung sowohl aus Kunststoff als auch aus Metall bestehen, wohingegen die Anschlußhülse des gattungsgemäßen Übergangsstückes ausschließlich aus Metall besteht, so daß die zuvor erläuterten technischen Probleme des gattungsgemäßen Übergangsstückes bei der bekannten Formschlauchverzweigung nicht auftreten.

Es ist daher Aufgabe der vorliegenden Erfindung, ein Übergangsstück der im Oberbegriff des Anspruchs 1 angegebenen Art zu schaffen, das auch bei hohen Innendrücken von im Übergangsstück geführten Flüssigkeiten dicht ist.

Die Lösung dieser Aufgabe erfolgt durch die Merkmale des Anspruches 1.

Dadurch wird erreicht, daß der in die metallene Anschlußhülse eingespritzte Kunststoff des Verbindungsstückes an den für die Dichtwirkung des Übergangsstückes problematischen Stellen gänzlich vom Metall der Anschlußhülse umgeben ist. Dadurch wird verhindert, daß das Kunststoffmaterial vom Metall wegschrumpft. Bei der Schrumpfung nach dem Abkühlen während der Fertigung des erfindungsgemäßen Übergangsstückes und insbesondere bei Druckbelastung durch ein durchströmendes flüssiges Medium entsteht ein verstärktes Auspressen des Kunststoffmateriales an die Wände des Halteabschnittes des Übergangsstückes, so daß beim Aufbringen hoher Innendrücke die Dichtwirkung nicht vermindert, sondern im Gegenteil verstärkt wird.

Der Halteabschnitt des erfindungsgemäßen Übergangsstückes ist aufgrund der Anordnung der Wände im wesentlichen U-förmig ausgebildet und bildet eine Haltetasche, die das eingespritzte Kunststoffmaterial an drei Seiten umgibt. Dadurch wird es möglich, daß die von innen aufgebrachten hohen Drücke das Kunststoffmaterial des Verbindungsstückes gegen die metallenen Wände des Halteabschnittes drückt, was, wie gesagt, die Dichtwirkung erhöht. So haben weitere im Rahmen der Erfindung durchgeführte Untersuchungen ergeben, daß das erfindungsgemäße Übergangsstück auch bei Dauerbelastungen bis zu 90 bar und mehr Innendruck keine Undichtigkeiten zeigte.

Da die Wände des Halteabschnittes mit Nuten bzw. Einstichen versehen sind, ergeben sich Kanten, an denen das Kunststoffmaterial des Verbindungsstückes vor allem gegen die metallenen Wände der Anschlußhülse angepreßt wird, was einen besonders hohen Dichtungseffekt ergibt.
Die Einstiche bzw. ringförmig umlaufenden Nuten verhindern ferner, daß der Kunststoff des Verbindungsstückes ausschrumpfen oder durch Zugeinwirkung sich von der Anschlußhülse lösen kann.

Ein weiterer Vorteil wird dadurch erreicht, daß beim Montieren von Armaturen an der Anschlußhülse nur an deren metallenen Fläche mit Montagegeräten angesetzt werden muß, so daß ein Aufbringen eines Drehmomentes verhindert werden kann, das bei bisher bekannten Übergangsstücken die Bindung zwischen dem Kunststoff des Verbindungsstückes und der Anschlußhülse lösen konnte.

Die Unteransprüche haben vorteilhafte Weiterbildungen der Erfindung zum Inhalt.

Weitere Einzelheiten, Merkmale und Vorteile der Erfindung ergeben sich aus nachfolgender Beschreibung zweier Ausführungsbeispiele anhand der Zeichnung:

Es zeigt:
- Fig. 1: eine Ansicht einer Stirnfläche einer Anschlußhülse des erfindungsgemäßen Übergangsstückes,
- Fig. 2: eine teilweise geschnittene Darstellung der Anschlußhülse gemäß Fig. 1,
- Fig. 3: eine Ausführungsform des erfindungsgemäßen Übergangsstückes bestehend aus einer möglichen Ausführung eines Verbindungsstückes und der Anschlußhülse gemäß den Fig. 1 und 2, und
- Fig. 4 bis 7: eine Anschlußhülse einer zweiten Ausführungsform des erfindungsgemäßen Übergangsstückes.

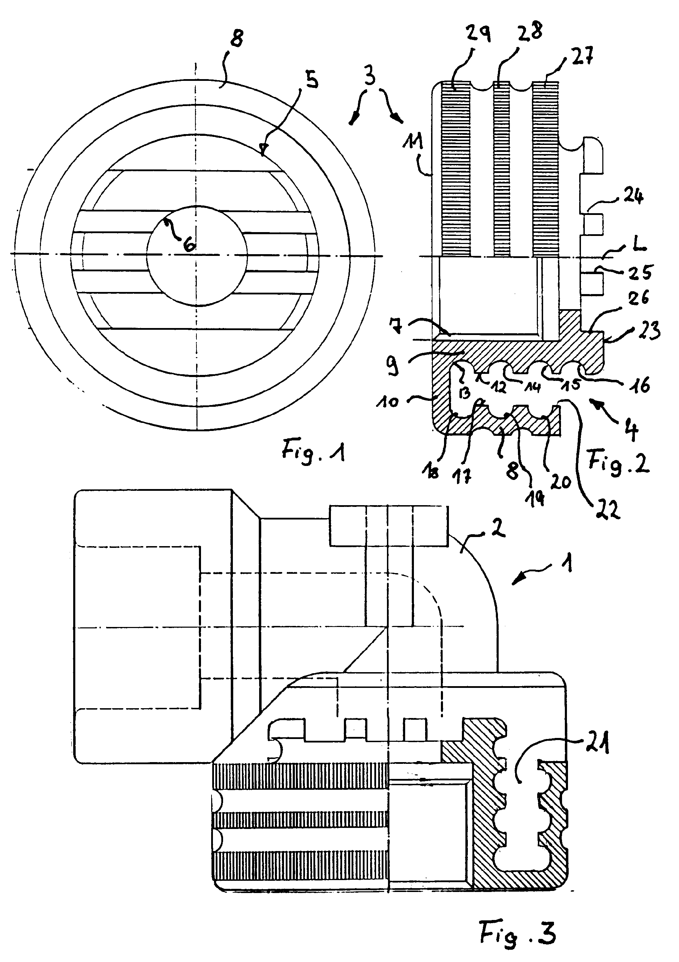

Das in seiner Gesamtheit in Fig. 3 dargestellte Übergangsstück 1 weist ein Verbindungsstück 2 und eine vor allem aus den Fig. 1 und 2 erkennbare Anschlußhülse 3 auf.

Fig. 1 verdeutlicht hierbei, daß die Anschlußhülse 1 im Beispielsfalle ein kreiszylindrisches Teil ist, das einen vor allem aus Fig. 2 erkennbaren umfangsseitigen Halteabschnitt 4 aufweist.

Die Anschlußhülse 3 weist ferner ein zentrisch angeordnetes zylindrisches Mittelteil 5 auf, das eine Mittelbohrung 6 aufweist, die mit einem Innengewinde 7 versehen sein kann.

Der zylindrische Mittelteil 5 ist von einer Ringwand 8 umgeben, dies sich gemäß der Schnittausstellung der Fig. 2 parallel zur Längsachse L der Anschlußhülse 3 erstreckt. Die Ringwand 8 ist eine Wand des Halteabschnittes 4, die parallel zu einer zweiten Wand 9 angeordnet ist, die ebenfalls als Ringwand ausgebildet ist und ein Teil des Mittelteiles 5 darstellt. Die Anordung der Wände 8 und 9 geht insbesondere aus Fig. 2 hervor, woraus deutlich wird, daß die Wände 8 und 9 durch eine Verbindungswand 10 verbunden sind, die im Beispielsfalle einstückig mit den Wänden 8 und 9 ausgebildet ist. Die Ringwand 10 ist im wesentlichen senkrecht zur Längsachse L angeordnet und liegt in der Ebene einer ersten Stirnfläche 11 der Anschlußhülse 3, an die das Gewinde 7 im Inneren der Bohrung 6 anschließt.

Aus Fig. 2 wird deutlich, daß der Halteabschnitt 4 aufgrund der zuvor erläuterten Ausbildung im wesentlichen U-förmig ausgebildet ist, wobei die innere Wand 9 des Halteabschnittes 4 länger ist als die radial weiter außenliegende Wand 8.

Fig. 2 zeigt ferner, daß die Innenfläche 12 der Ringwand 9 im Beispielsfalle vier ringförmig umlaufende Nuten bzw. Einstiche 13 - 16 aufweist, während die auf die Wand 9 zuweisende Innenfläche 17 der außenliegenden Wand 18 im Beispielsfalle drei ringförmig umlaufende Nuten bzw. Einstiche 18 - 20 aufweist. Durch die einander jeweils gegenüberliegenden Nuten 13, 18, 14, 19, bzw. 15, 20 werden Ausbauchungen geschaffen, in die das aus Fig. 3 ersichtliche eingespritzte Kunststoffmaterial 21 des Verbindungsstückes 2 eingreift. Insbesondere an den Kanten zwischen den zuvor genannten Nuten und den Innenflächen 12 bzw. 17 werden besonders hohe Halte- und Dichtkräfte aufgebaut, die zum einen die Dichtwirkung erhöhen und zum anderen das Wegschrumpfen des Kunststoffmateriales 21 aus dem taschenförmigen Halteabschnitt 4 sicher verhindern.

Fig. 2 zeigt ferner, daß durch die Anordnung der Wände 8, 9 und 10, die eine dreiseitig geschlossene Haltetasche bilden, eine Eintrittsöffnung 22 gebildet wird, die einer zweiten Stirnfläche 23 der Anschlußhülse 3 benachbart angeordnet ist. Durch diese Eintrittsöffnung 22 kann beim Anbinden des Verbindungsstückes 2 dessen Kunststoffmaterial in den taschenförmigen Halteabschnitt 4 eintreten und diesen aushöhlen, wie dies aus Fig. 3 ersichtlich ist.

In der Stirnflache 23 sind zudem eine Mehrzahl paralleler Nuten 24 - 26 vorgesehen, die als Verdrehsicherung dienen und in die ebenfalls Kunststoffmaterial des Verbindungsstückes 2 eintritt, was ebenfalls aus Fig. 3 ersichtlich ist.

Aus den Figuren 2 und 3 ist schließlich ersichtlich, daß auf der Außenumfangsfläche der äußeren Wand 8 insgesamt drei ringförmig umlaufende Riffelungen 27 - 29 vorgesehen sind, die zum Ansetzen eines Montagewerkes dienen können.

Zum Verbinden des aus Fig. 2 ersichtlichen Verbindungsstückes 2 mit der metallenen Anschlußhülse 3 wird das Kunststoffmaterial des Verbindungsstückes 2 in den ringförmig umlaufenden taschenartigen Halteabschnitt 4 und die Verdrehsicherung eingespritzt, so daß die aus Fig. 3 ersichtliche Gesamtkonfiguration entsteht. Hierbei ist die Ausführungsform des Verbindungsstückes 2 als Winkelstück, wie sie in Fig. 3 dargestellt ist, nicht zwingend, sondern es können jegliche erforderliche Arten von Verbindungsstücken aus Kunststoff mit der Anschlußhülse 3 in der zuvor beschriebenen Art kombiniert werden, wobei in jedem Falle eine hoch dichte Verbindung entsteht, die auch bei hohen Innendrücken ein Unterkriechen des Verbindungsbereiches zwischen Verbindungsstück 2 und Anschlußhülse 3 verhindert.

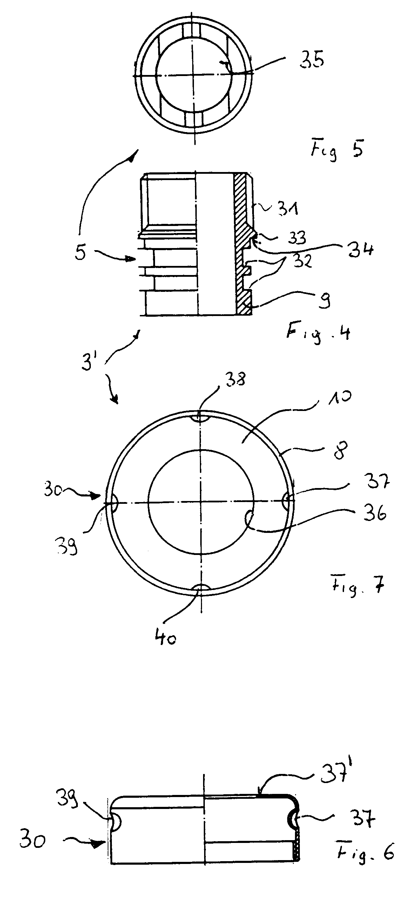

In den Fig. 4 bis 7 ist eine bei einer zweiten Ausführungsform des Übergangsstückes verwendbare Anschlußhülse 3′ dargestellt, die bei dieser Ausführungsform aus einem etwas modifizierten Mittelteil 5′ und einem kappen- bzw. topfartigen separaten Bauteil 30 zusammensetzbar ist.

Das Mittelteil 5 ist als Rohrstück ausgebildet und weist an einem Endbereich ein Außengewinde 31 auf, während der andere Bereich des Mittelteiles bzw. Rohrstückes 5 mit einer Mehrzahl von ringförmigen Nuten bzw. Einstichen 32 versehen sein kann.

Zwischen dem Außengewinde 31 und den Einstichen 32 ist ein ringförmig umlaufender Anschlagbund 33 vorgesehen, der eine plane Anschlagfläche 34 in Form einer Ringfläche aufweist, die auf die Einstiche 32 zuweist. Ferner weist das Mittelteil 5 eine Durchgangsausnehmung 35 auf, die bei der in den Fig. 4 und 5 dargestellten Ausführungsform glattwandig ausgebildet ist.

Das Bauteil bzw. die Kappe 30 umfaßt die bei der Ausführungsform gemäß Fig. 2 ebenfalls vorgesehene äußere Wand 8, die zusammen mit der am Mittelteil 5 vorgesehenen inneren Wand 9 die Haltetasche bildet, wenn die Kappe 30 auf dem Mittelteil 5 montiert ist.

Ferner umfaßt das kappenartige Bauteil 30 die Verbindungswand 10, in der bei der in den Fig. 6 und 7 dargestellten Ausführungsform eine Einstecköffnung 36 angeordnet ist, deren Innendurchmesser etwas größer ist als der Außendurchmesser des Mittelteiles 5 im Bereich der Einstiche 32, so daß die Kappe 30 über das Mittelteil 5 geschoben werden kann, bis sie mit der Außenfläche 37 an der Anschlagfläche 34 der ringförmigen Anschlagschulter 33 anliegt.

In den Außenumfang der Wand 8 des kappenförmigen Bauteiles 30 sind im Beispielsfalle vier Vertiefungen 37 bis 40 angeordnet, die zusammen mit den Einstichen 32 als Verdrehsicherung und zum Festhaken des Kunststoffmateriales in der vom Mittelteil 5 und der Kappe 30 gebildeten Haltetasche dienen. Bei dieser Ausführungsform können vorteilhafterweise die stirnseitigen Nuten im Mittelteil 5 entfallen.

Zur Herstellung in den Fig. 4 bis 7 dargestellten Anschlußhülse 3′ wird zunächst durch einen Preßvorgang das kappenförmige separate Bauteil 30 mit seinen Vertiefungen 37 bis 40 hergestellt. Ferner wird das Mittelteil 5 in Form des zylindrischen Rohrstückes hergestellt, wobei die Einstiche 32 sowie das Außengewinde 31 angebracht werden. Alternativ ist es auch möglich, an Stelle eines Außengewindes die Durchgangsausnehmung 35 zumindest teilweise mit einem Innengewinde zu versehen.

Danach wird das Bauteil 30 mit Hilfe seiner Einstecköffnung 36 über das Mittelteil 5 gesteckt, bis die Außenfläche 37′ an der Anschlagfläche 34 anliegt. Dann werden die beiden Teile 35 im Bereich der Anschlagschulter durch Löten oder Schweißen miteinander verbunden, wobei gleichzeitig die Verbindungsstelle in geeigneter Weise abgedichtet wird.

Diese Art der Konstruktion der Anschlußhülse 3′ weist den Vorteil einer erheblichen Material- und Fertigungsersparnis gegenüber der ersten Ausführungsform auf. Aus diesem Grunde können die Teile 35 aus nicht rostendem Material, beispielsweise Edelstahl, auf wirtschaftliche Art und Weise hergestellt werden. Die ansonsten im Zusammenhang mit der Ausführungsform gemäß den Fig. 1 bis 3 geschilderten Vorteile bleiben bei einem Übergangsstück unter Verwendung der Anschlußhülse gemäß den Fig. 4 bis 7 in vollem Umfange erhalten.

Die am Außenumfang angebrachten Vertiefungen 37 bis 40 ergeben den Vorteil einer größeren Drehmomentwirkung und bieten daher eine besonders hohe Verdrehsicherung gegenüber dem einzuspritzenden Kunststoffmaterial.

Da bei der Anschlußhülse 3′ gemäß den Fig. 4 bis 7 u.a. auch nicht rostende Materialien, wie beispieslweise Edelstahl, verwendet werden können, ist das entsprechende Übergangsstück auch für die Verwendung für aggressive Medien geeignet.

## Patentansprüche

1. Übergangsstück (1)
- mit einem Verbindungsstück (2) aus Kunststoff und
- mit einer metallenen Anschlußhülse (3), die einen umfangsseitigen Halteabschnitt (4) zum Anbinden der Anschlußhülse (3) an das eingespritzte Kunststoffmaterial (21) des Verbindungsstückes (2) aufweist, und die in ihre Mittelbohrung (6) ein Innengewinde (7) zum Anschluß von Armaturen aufweist,
dadurch gekennzeichnet,
- daß der Halteabschnitt (4) zwei sich im wesentlichen parallel zueinander und zur Längsachse (L) der Anschlußhülse (3) parallel erstreckende Wände (8, 9) aufweist, die beabstandet zueinander sind und mit einer im wesentlichen senkrecht zur Längsachse (L) der Anschlußhülse (3) angeordneten Verbindungswand (10) eine das eingespritzte Kunststoffmaterial (21) an drei Seiten umgebende Haltetasche bilden,
- daß die Innenfläche (12) der der Längsachse (L) der Anschlußhülse (3) näheren Wand (9) des Halteabschnitts (4) ringförmig umlaufende nach außen weisende Nuten (13 - 16) aufweist, die Haltekanten für das eingespritzte Kunststoffmaterial bilden,
- daß die innere Wand (9) des Halteabschnittes (4) länger ist als die radial weiter außen angeordnete Wand (8), und
- daß auf der Außenoberfläche der äußeren Wand (8) zumindestens eine ringförmig umlaufende Riffelung (27 - 29) angeordnet ist.

2. Übergangsstück nach Anspruch 1, dadurch gekennzeichnet,
daß die Haltetasche eine der Verbindungswand (10) gegenüber angeordnete Eintrittsöffnung (22) aufweist.

3. Übergangsstück nach Anspruch 2, dadurch gekennzeichnet,
daß die Eintrittsöffnung (22) an eine erste Stirnfläche (23) der Anschlußhülse (3) angrenzt, die dem Verbindungsstück zugewandt ist.

4. Übergangsstück nach Anspruch 3, dadurch gekennzeichnet,
daß die Stirnfläche (23) eine Verdrehsicherung in Form einer Mehrzahl von parallelen Nuten (24 - 26) aufweist.

5. Übergangsstück nach einem der Ansprüche 1 - 4, dadurch gekennzeichnet,
daß die Innenfläche (17) der die innere Wand (9) ringförmig umgebenden äußeren Wand (8) des Halteabschnittes (4) nach innen auf die innere Wand (9) weisende ringförmige umlaufende Nuten (18 - 20) aufweist.

6. Übergangsstück nach einem der Ansprüche 1 - 5, dadurch gekennzeichnet,
daß die Verbindungswand (10) in der Ebene der zweiten Stirnfläche (11) der Anschlußhülse (3) angeordnet ist.

7. Übergansstück nach Anspruch 5 oder 6, dadurch gekennzeichnet,
daß durch die Nuten (13 - 16 und 18 - 20) Haltekanten für das eingespritzte Kunststoffmaterial (21) gebildet wird.

8. Übergangsstück nach einem der Ansprüche 1 -7, dadurch gekennzeichnet, daß die Haltetasche von einem kappen- bzw. topfartigen separaten Bauteil (30) und einem ebenfalls als separates Bauteil ausgebildeten Mittelteil (5) gebildet ist.

9. Übergangsstück nach Anspruch 8, dadurch gekennzeichnet, daß das topfartige Bauteil (30) die Verbindungs- wand (10) umfaßt, in der eine Einstecköffnung (36) für das Mittelteil (5) angeordnet ist.

10. Übergangsstück nach Anspruch 8 oder 9, dadurch gekennzeichnet, daß das topfförmige Bauteil (30) ein Preßteil ist.

11. Übergangsstück nach einem der Ansprüche 8 - 10, dadurch gekennzeichnet, daß in der äußeren Ringwand (8) des topfförmigen Bauteiles (30) Vertiefungen (37 - 40) angeordnet sind.

12. Übergangsstück nach einem der Anspruche 8 - 11, dadurch gekennzeichnet, daß das Mitteilteil (5) eine Anschlagschulter (33) für das topfförmige Bauteil (30) aufweist.

13. Übergangsstück nach einem der Ansprüche 8 - 12, dadurch gekennzeichnet, daß das Mittelteil (5) und das topfförmige Bauteil (30) durch Schweißen oder Löten miteinander zur Bildung der Haltetasche verbindbar sind.

14. Übergangsstück nach einem der Ansprüche 8 - 13, dadurch gekennzeichnet, daß die Verbindungsstelle zwischen dem Mittelteil (5) und dem topfförmigen Bauteil (30) abgedichtet ist.

15. Übergangsstück nach einem der Ansprüche 8 - 14, dadurch gekennzeichnet, daß das Mittelteil (5) und das topfförmige Bauteil (30) aus nicht rostenden Materialien, insbesondere Edelstahl, bestehen.

## Claims

1. A transition piece (1)
- having a connection piece (2) made from plastic and
- having a metal connection sleeve (3), which comprises a retention portion (4) on the periphery for joining the connection sleeve (3) to the injected plastic material (21) of the connection piece (2), and which in its middle bore hole (6) comprises an internal thread (7) for the connection of fittings,
**characterised**
- **in that** the retention portion (4) comprises two walls (8, 9) which are substantially mutually parallel and extend parallel to the longitudinal axis (L) of the connection sleeve (3), which are spaced from one another and with a connecting wall (10) disposed substantially perpendicular to the longitudinal axis (L) of the connection sleeve (3) form a retention pocket surrounding the injected plastic material (21) on three sides,
- **in that** the inner face (12) of the wall (9) of the retention portion (4) closer to the longitudinal axis (L) of the connection sleeve (3) comprises circular, outwardly pointing grooves (13 - 16), which form retention edges for the injected plastic material,
- **in that** the inner wall (9) of the retention portion (4) is longer than the wall (8) disposed farther in the radially outer direction, and
- **in that** on the outer surface of the outer wall (8) there is disposed at least one corrugation in a circle (27 - 29).

2. A transition piece according to Claim 1,
**characterised in that** the retention pocket comprises an inlet aperture (22) disposed opposite the connecting wall (10).

3. A transition piece according to Claim 2,
**characterised in that** the inlet aperture (22) abuts a first front face (23) of the connection sleeve (3), which is turned towards the connection piece.

4. A transition piece according to Claim 3,
**characterised in that** the front face (23) comprises an anti-twisting device in the form of a plurality of parallel grooves (24 - 26).

5. A transition piece according to one of Claims 1 to 4,
**characterised in that** the inner face (17) of the outer wall (8) of the retention portion (4) surrounding the inner wall (9) in a circle comprises circular grooves (18 - 20) which point inwards to the inner wall (9).

6. A transition piece according to one of Claims 1 to 5,
**characterised in that** the connecting wall (10) is disposed in the plane of the second end face (11) of the connection sleeve (3).

7. A transition piece according to Claim 5 or 6,
**characterised in that** by the grooves (13 - 16 and 18 - 20) are formed retention edges for the injected plastic material (21).

8. A transition piece according to one of Claims 1 to 7,
**characterised in that** the retention pocket is formed by a cap-like or pot-shaped separate component (30) and a middle part (5) also constructed as a separate component.

9. A transition piece according to Claim 8,
**characterised in that** the pot-shaped component (30) encircles the connecting wall (10), in which a plug-in aperture (36) for the middle part (5) is disposed.

10. A transition piece according to Claim 8 or 9,
**characterised in that** the pot-shaped component (30) is a moulded part.

11. A transition piece according to one of Claim 8 to 10,
**characterised in that** recesses (37 - 40) are disposed in the outer annular wall (8) of the pot-shaped component (30).

12. A transition piece according to one of Claims 8 to 11,
**characterised in that** the middle part (5) comprises a shoulder (33) for the pot-shaped component (30).

13. A transition piece according to one of Claims 8 to 12,
**characterised in that** the middle part (5) and the pot-shaped component (30) can be connected by welding or soldering to form the retention pocket.

14. A transition piece according to one of Claims 8 to 13,
**characterised in that** the connecting point between the middle part (5) and the pot-shaped component (30) is sealed.

15. A transition piece according to one of Claims 8 to 14,
**characterised in that** the middle part (5) and the pot-shaped component (30) are made from rustproof materials, especially special steel.

## Revendications

1. Pièce intermédiaire (1)
- avec un raccord (2) en matière plastique, et
- avec une douille de raccordement métallique (3) qui présente une section de retenue (4) pour la liaison de la douille de raccordement (3) à la matière plastique (21) injectée du raccord (2) et qui présente, dans son alésage central (6), un taraudage (7) pour le raccordement d'accessoires,
caractérisée en ce
- que la section de retenue (4) présente deux parois (8, 9), s'étendant sensiblement parallèlement l'une à l'autre et parallèlement à l'axe longitudinal (L) de la douille de raccordement (3), qui sont distantes l'une de l'autre et forment, avec une paroi de liaison (10) disposée sensiblement perpendiculairement à l'axe longitudinal (L) de la douille de raccordement (3), une poche de retenue entourant de trois côtés la matière plastique (21) injectée,
- que la face intérieure (12) de la paroi (9), proche de l'axe longitudinal (L) de la douille de raccordement (3), de la section de retenue (4) présente des rainures périphériques annulaires (13 à 16) dirigées vers l'extérieur qui forment des arêtes de retenue pour la matière plastique (21) injectée,
- que la paroi intérieure (9) de la section de retenue (4) est plus longue que la paroi (8) disposée radialement plus à l'extérieur, et
- que sur la surface extérieure de la paroi extérieure (8) est disposé au moins un striage périphérique annulaire (27 à 29).

2. Pièce intermédiaire suivant la revendication 1, caractérisée en ce que la poche de retenue présente une ouverture d'entrée (22) disposée face à la paroi de liaison (10).

3. Pièce intermédiaire suivant la revendication 2, caractérisée en ce que l'ouverture d'entrée (22) est voisine d'une première face frontale (23) de la douille de raccordement (3) qui est orientée vers le raccord.

4. Pièce intermédiaire suivant la revendication 3, caractérisée en ce que la face frontale (23) présente un dispositif anti-rotation sous forme d'une pluralité de rainures (24 à 26) parallèles.

5. Pièce intermédiaire suivant l'une des revendications 1 à 4, caractérisée en ce que la face intérieure (17) de la paroi extérieure (8), entourant en forme d'anneau la paroi intérieure (9), de la section de retenue (4) présente des rainures périphériques annulaires (18 à 20) orientées vers l'intérieur, vers la paroi intérieure (9).

6. Pièce intermédiaire suivant l'une des revendications 1 à 5, caractérisée en ce que la paroi de liaison (10) est disposée dans le plan de la seconde face frontale (11) de la douille de raccordement (3).

7. Pièce intermédiaire suivant la revendication 5 ou 6, caractérisée en ce que par les rainures (13 à 16 et 18 à 20) sont formées des arêtes de retenue pour la matière plastique (21) injectée.

8. Pièce intermédiaire suivant l'une des revendications 1 à 7, caractérisée en ce que la poche de retenue est formée par un élément (30) séparé en forme de capuchon ou de pot et un élément central (5) se présentant également comme élément séparé.

9. Pièce intermédiaire suivant la revendication 8, caractérisée en ce que l'élément (30) en forme de pot comporte la paroi de liaison (10) dans laquelle est disposée une ouverture d'emboîtement (36) pour l'élément central (5).

10. Pièce intermédiaire suivant la revendication 8 ou 9, caractérisée en ce que l'élément (30) en forme de pot est une pièce emboutie.

11. Pièce intermédiaire suivant l'une des revendications 8 à 10, caractérisée en ce que dans la paroi annulaire extérieure (8) de l'élément (30) en forme de pot sont disposés des évidements (37 à 40).

12. Pièce intermédiaire suivant l'une des revendications 8 à 11, caractérisée en ce que l'élément central (5) présente un épaulement de butée (33) pour l'élément (30) en forme de pot.

13. Pièce intermédiaire suivant l'une des revendications 8 à 12, caractérisée en ce que l'élément central (5) et l'élément (30) en forme de pot peuvent être assemblés l'un à l'autre par soudage ou brasage, pour former la poche de retenue.

14. Pièce intermédiaire suivant l'une des revendications 8 à 13, caractérisée en ce que l'endroit d'assemblage entre l'élément central (5) et l'élément (30) en forme de pot est rendu étanche.

15. Pièce intermédiaire suivant l'une des revendications 8 à 14, caractérisée en ce que l'élément central (5) et l'élément (30) en forme de pot sont en un matériau inoxydable, en particulier en acier inoxydable.
